# EUROPÄISCHE PATENTSCHRIFT

(11) **EP 3 649 016 B1**
(45) Veröffentlichungstag und Bekanntmachung des Hinweises auf die Patenterteilung: **23.06.2021**
(21) Anmeldenummer: 18753081.1
(22) Anmeldetag: 26.07.2018
(51) Int. Cl.: B60R 7/10, B64D 11/00, B61D 37/00

(54) **BAUEINHEIT**
STRUCTURAL UNIT
UNITÉ MODULAIRE

(30) Priorität: 01.09.2017 DE 102017215342
(43) Veröffentlichungstag der Anmeldung: 13.05.2020
(73) Patentinhaber: Siemens Mobility GmbH, 81739 München (DE)
(72) Erfinder: HESTERBERG, Joshua, 40822 Mettmann (DE); SCHIEFER, Benno, 40233 Düsseldorf (DE)
(86) Internationale Anmeldenummer: PCT/EP2018/070311
(87) Internationale Veröffentlichungsnummer: WO 2019/042670

(56) Entgegenhaltungen:
- EP-A1- 0 311 771
- EP-A1- 2 562 035
- JP-B2- 3 594 470

## Beschreibung

Die Erfindung betrifft eine Baueinheit aufweisend ein ortsfestes Lagerelement, ein Abdeckelement, insbesondere eine Rolloabdeckung, und zumindest ein Halteelement, insbesondere einen Haken, nach dem Oberbegriff von Anspruch 1.

Eine solche Baueinheit ist beispielsweise aus der gattungsbildenden JP 3 59447C B2 bekannt. Zudem ist aus der EP 2 562 035 A1 ein Tassenhalter mit mehreren koaxial gelagerten Komponenten bekannt.

Im Reiseverkehr hat für Betreiber moderner Verkehrsnetze, wie beispielsweise einem Betreiber eines Zugnetzes oder Anbieter im Luftverkehr, eine hohe Auslastung einen wettbewerbsverbessernden Stellenwert. Damit sind minimale Stand- und Wartungszeiten wichtig und folglich schnelle Montagevorgänge nötig. Gleichzeitig müssen eingesetzte Verkehrsmittel, wie Züge, U-Bahnen oder Flugzeuge, auch einem hohen Sicherheits- und Komfortstandard genügen.

Es ist beispielsweise bekannt, Abdeckelemente, wie etwa Rolloabdeckungen, und Halteelemente, wie etwa Kleiderhaken, unterhalb eines ortsfesten Lagerelementes, bspw. einer Gepäckablage, an verschiedenen Punkten des Lagerelementes zu verorten. Ein Aushängen der Rolloabdeckung, beispielsweise während einer Wartung, durch z.B. Hochklappen ist hierbei nur möglich durch Verschieben der Kleiderhaken in ein Nachbarmodul oder sogar nur durch Ausbau eines Gepäckablagemodules.

Es ist eine Aufgabe der vorliegenden Erfindung, eine Baueinheit bereitzustellen, bei der ein Montage- bzw. Demontageaufwand der Baueinheit Zeit und Kosten sparend reduziert werden kann. Ferner soll ein bedienerfreundliches und komforterzeugendes Halteelement zur Verfügung gestellt werden.

Diese Aufgabe wird erfindungsgemäß gelöst mit einer Baueinheit mit den Merkmalen des unabhängigen Anspruchs. Günstige Ausgestaltungen und Vorteile der Erfindung ergeben sich aus den weiteren Ansprüchen, den Zeichnungen und der Beschreibung.

Die Erfindung geht aus von einer Baueinheit aufweisend zumindest ein ortsfestes Lagerelement, ein bewegliches Abdeckelement, insbesondere eine Rolloabdeckung, und zumindest ein bewegliches Halteelement, insbesondere einen Haken, wobei das bewegliche Abdeckelement unter Verwendung eines ersten Traglagers gegenüber dem ortsfesten Lagerelement drehbar um eine erste Drehachse gelagert ist und das bewegliche Halteelement unter Verwendung eines zweiten Traglagers gegenüber dem ortsfesten Lagerelement drehbar um eine zweite Drehachse gelagert ist, wobei die erste Drehachse und die zweite Drehachse koaxial zueinander sind und das ortsfeste Lagerelement eine bereichsweise offene erste Lagerschale aufweist, in welcher ein in die bereichsweise offene erste Lagerschale einsetzbarer Lagerpartner des beweglichen Abdeckelementes drehbar aufgenommen ist und das bewegliche Abdeckelement eine bereichsweise offene zweite Lagerschale aufweist, in welcher ein zweiter in die bereichsweise offene zweite Lagerschale einsetzbarer Lagerpartner des beweglichen Halteelementes aufgenommen ist.

Durch die erfindungsgemäße Ausgestaltung ergeben sich Montage-, Demontage- und Wartungsvorteile. Das Abdeckelement kann beispielsweise vor der Montage direkt mit dem Halteelement oder mit mehreren Halteelementen bestückt werden. Damit wird die Montage bzw. Demontage gegenüber Systemen des Standes der Technik vereinfacht und beschleunigt. Ferner wird eine Behinderung der Montage bzw. Demontage des Abdeckelementes durch das Halteelement verhindert. Ferner können Kosten reduziert werden.

Selbst wenn bestimmte Begriffe im Singular oder Plural in den Patentansprüchen oder der Beschreibung verwendet werden, soll der Schutzbereich des Patentes bzw. der Anmeldung nicht nur auf diese spezifisch genannte Anzahl beschränkt werden. Der Schutzbereich der Erfindung soll sich auch auf eine Einzahl, Vielzahl oder eine andere Anzahl der entsprechenden Struktur beziehen.

Die Baueinheit kann jede dem Fachmann für dienlich erscheinende Einheit sein, die ein Lagerelement, ein Abdeckelement und ein Halteelement aufweist. Bevorzugt ist sie Bestandteil eines Aufenthaltsraumes, der temporär, beispielsweise von Reisenden, genutzt wird und in dem temporär Objekte am Halteelement aufgehängt werden. Bevorzugt ist die Baueinheit Teil einer mobilen Einheit, wie eines Zuges, einer U-Bahn oder eines Flugzeuges. Ferner kann die Baueinheit oder Bauteilgruppe zusätzlich zu den genannten Elementen weitere Elemente oder Bauteile aufweisen.

Das ortsfeste Lagerelement kann jede(s) dem Fachmann für einsetzbar erachtetes Element/Bauteil oder erachtete Bauteilgruppe sein, welches/welche zumindest ein anderes Element, wie das Abdeckelement oder das Halteelement, lagert. Bevorzugt kann das Lagerelement in einem Deckenbereich und/oder Deckeneckbereich des Aufenthaltsraumes (z.B. Zugwaggon) angeordnet oder montiert sein. Hierbei soll unter "ortsfest" verstanden werden, dass das Lagerelement bzw. ein das andere Element lagernde Teil des Lagerelementes im montierten Zustand bzw. zumindest im Nutzungszustand des Aufenthaltsraumes bzw. des Zuges sich immer an demselben Ort relativ zu seinem eigenen Montageort befindet und nicht von diesem Ort weg bewegbar ist. Diese Definition soll nicht ausschließen, dass das Lagerelement selbst Bestandteil einer übergeordneten Bauteilgruppe ist, die wiederum bewegliche Teile, z.B. schwenkbare Türen, aufweisen kann. Bevorzugt ist das ortsfeste Lagerelement ein Teil einer Gepäckaufbewahrungseinheit (Gepäckablage, Gepäckfach).

Des Weiteren soll unter "beweglich" verstanden werden, dass das Abdeckelement bzw. das Halteelement in seinem montierten Zustand in seiner Lage relativ zum Lagerelement veränderbar ist. Dies kann beispielsweise ein Drehen, Schwenken, Kippen, Klappen oder Verschieben, insbesondere ein axiales Verschieben, sein. Hingegen soll unter "beweglich" nicht ein Entfernen bzw. Abmontieren vom Lagerelement verstanden werden. Im folgenden Text werden das ortsfeste Lagerelement, das bewegliche Abdeckelement und das bewegliche Halteelement auch ohne das beschreibende Adjektiv verwendet.

Das Abdeckelement kann von jedem dem Fachmann für sinnvoll erachteten Element gebildet sein, das ein korrespondierendes Element abdeckt/überdeckt. Das Abdeckelement kann beispielsweise einen Zugriff und/oder eine Sicht und/oder einen Zugang auf das/zu dem korrespondierenden Element erschweren oder verhindern. Ferner kann das Abdeckelement das korrespondierende Element auch vor Beschädigungen schützen. In diesem Zusammenhang soll unter einem korrespondierenden Element ein Element verstanden werden, welches mit dem Abdeckelement in einem funktionalen und/oder gewollten, spezifischen, bezweckten Zusammenhang steht. Bevorzugterweise kann das Abdeckelement eine Abdeckung einer Verschattungsanlage, wie beispielsweise einer Rolloabdeckung, sein. In diesem Fall wäre das korrespondierende Element ein Rollo zum Verdunkeln von Zugfenstern. Die Rolloabdeckung dient beispielsweise zu einer Abdeckung einer Mechanik des Rollos (Jalousie). Damit liegt das aufgerollte Rollo, z.B. ein aufrollbares Netztextil, inkl. Mechanik zwischen dem Abdeckelement und einer Wand, wie beispielsweise einer Zugwand, oder aus Sicht eines Beobachters, wie bspw. dem Fahrgast, hinter dem Abdeckelement.

Das Abdeckelement kann aus jedem dem Fachmann für einsetzbar erachteten Material, wie einem Metall, einem Kunststoff oder einem Textil, gefertigt sein. Bevorzugt ist das bewegliche Abdeckelement aus einem Material gefertigt aus der Gruppe bestehend aus: gerolltem Blech, ein Alu-Strangpressprofil und ein Kunststoff, insbesondere Pultrodat.

Das Halteelement kann jedes dem Fachmann für nutzbar erachtetes Element sein, welches zum Halten von zumindest einem Objekt (Kleidungsstück, Tasche, Zeitung etc.) vorbereitet/ausgestaltet ist. Die Haltekraft kann nach jedem dem Fachmann denkbaren Prinzip erfolgen, wie beispielsweise einem Form- und/oder Kraftschluss, Magnetismus, einer Saugkraft etc. Bevorzugt ist das bewegliche Halteelement ein Haken bzw. ein Kleiderhaken, wobei Kleiderhaken hier als Oberbegriff für Objekte/Gegenstände verwendet werden soll, die ein Reisender während seiner Reise aufhängen kann (Kleidungsstück, Tasche, Regenschirm etc.). Das bewegliche Halteelement kann aus jedem Material, das dem Fachmann für anwendbar erscheint, gefertigt sein oder gemäß jeder dem Fachmann für verwendbaren Methode hergestellt sein. Bevorzugt kann das Halteelement ein Spritzgussteil oder aus Metall sein.

Gemäß der erfindungsgemäßen Konstruktion kann das erste Traglager und das zweite Traglager ein Doppellager bilden. Es ist zudem auch möglich, dass das erste und das zweite Traglager von einem Traglager bzw. von demselben Traglager gebildet sind bzw. zusammen fallen. Das erste Traglager bzw. das zweite Traglager kann bevorzugt als ein Radiallager ausgebildet sein. Jedes der Traglager kann zusätzlich als ein Gleitlager ausgebildet sein. Gemäß einer vorteilhaften Ausgestaltung ist zumindest das zweite Traglager als ein radiales Gleitlager ausgebildet. Hierdurch ergibt sich eine axiale Verschiebbarkeit (Verschiebung in Richtung der zweiten Drehachse) des Halteelementes, wodurch eine räumliche Anordnung des Halteelementes, insbesondere im Aufenthaltsraum und relativ zur Sitzposition des Fahrgastes, verändert bzw. frei eingestellt oder ausgesucht werden kann.

Das Merkmal, dass "die erste Drehachse und die zweite Drehachse koaxial zueinander sind" kann insbesondere bedeuten, dass sich das Abdeckelement und das Halteelement um dieselbe Achse drehen bzw. dass diese so gelagert sind, dass sie einen konzentrischen Drehpunkt haben. Ferner können beide Elemente denselben Auflagepunkt haben, d.h. die Kräfte, die auf die Elemente wirken, können im selben Punkt des Lagerelementes bzw. des Gepäckablageprofils aufgenommen werden. Somit kann ein gemeinsamer zentraler Befestigungspunkt für das Abdeckelement und das Halteelement am Lagerelement genutzt werden.

Des Weiteren wird vorgeschlagen, dass die Drehung des beweglichen Abdeckelementes im ersten Traglager auf einen ersten Drehwinkelbereich begrenzt ist. Hierdurch kann ein Bewegungsprofil des Abdeckelementes festgelegt werden. Vorteilhafterweise kann diese Drehung unter Verwendung eines ersten Begrenzungselementes oder mehrerer erster Begrenzungselementen begrenzt werden. Damit kann der Öffnungswinkel konstruktiv einfach bestimmt bzw. der Bewegungsspielraum limitiert werden. Das erste Begrenzungselement ist bevorzugt ein Anschlag des Lagerelementes oder ein Anschlag des Abdeckelementes oder ein Anschlagen an das Lagerelement.

Ferner ist es vorteilhaft, wenn die Drehung des beweglichen Halteelementes im zweiten Traglager auf einen zweiten Drehwinkelbereich begrenzt werden kann. Damit kann ein Bewegungsprofil des Halteelementes bestimmt werden. Ferner wird vorgeschlagen, dass diese Drehung unter Verwendung eines zweiten Begrenzungselementes oder mehrerer zweiter Begrenzungselementen begrenzt werden kann. Damit kann der Öffnungswinkel konstruktiv einfach festgelegt bzw. der Bewegungsspielraum limitiert werden. Das zweite Begrenzungselement ist bevorzugt ein Anschlag des Lagerelementes oder des Abdeckelementes oder ein Anschlagen an das Lagerelement oder an das Abdeckelement.

Eine bevorzugte Weiterbildung besteht darin, dass das bewegliche Abdeckelement und/oder das bewegliche Halteelement derart ausgebildet sein kann/können, dass das erste Traglager und das zweite Traglager nur Radialkräfte in der gleichen Radialrichtung aufnehmen können. Hierdurch wird eine stabile und sichere Lagerung erreicht. Unter "aufnehmen" soll hier auch "übertragen" verstanden werden. Herbei werden die Radialkräfte in einem gemeinsamen/demselben Auflagepunkt des Lagerelements aufgenommen. Vorteilhafterweise können die zwei Traglager die Radialkräfte zumindest in den übereinstimmenden Drehwinkelbereichen des ersten Drehwinkelbereiches und des zweiten Drehwinkelbereiches aufnehmen/übertragen.

Das Halteelement kann lediglich an einem Punkt bzw. einer Abstützung, also im zweiten Traglager, abgestützt sein oder an zwei oder mehreren Abstützungen des Abdeckelementes, wodurch ein verlässliches und/oder pendel- bzw. kippfreies Halten ermöglicht wird. Ist das zweite Traglager als Gleitlager für die axiale Beweglichkeit/Verschieblichkeit des Halteelementes ausgeführt, dient das Traglager als Führung bzw. weist eine Führungsfläche auf. Bei Vorsehung weiterer Abstützungen dienen auch diese als Führung bzw. weisen auch diese eine Führungsfläche auf.

In einer weiteren Ausgestaltung der Erfindung ist das bewegliche Halteelement am beweglichen Abdeckelement formschlüssig und/oder kraftschlüssig - insbesondere an zumindest einer Abstützung, insbesondre in radialer Richtung - abstützbar. Somit kann eine verlässliche Befestigung des Halteelementes am Abdeckelement gewährleistet werden. Zudem kann das Haltelement nicht pendeln und nicht, beispielsweise im Fahrbetrieb des Zuges, an das Abdeckelement anschlagen, was unangenehme und störende Geräusche verursachen würde. Folglich kann hiermit der Reisekomfort erhöht werden. In anderen Worten, das bewegliche Halteelement ist am beweglichen Abdeckelement unter Verwendung einer formschlüssigen oder kraftschlüssigen Verbindung abstützbar. Somit kann das Halteelement mit dem Abdeckelement durch einen Formschluss und/oder Kraftschluss verbindbar sein bzw. im montierten Zustand verbunden sein. Das Halteelement ist beispielsweise relativ zur Rolloabdeckung nicht drehbar.

Der Form- und/oder Kraftschluss kann im montierten Zustand des Abdeckelementes am Lagerelement lösbar oder unlösbar sein. Ist diese unlösbar, ist also das Halteelement relativ zum Abdeckelement undrehbar, kann eine besonders stabile Halterung des Halteelementes am Abdeckelement erreicht werden. Ist sie hingegen im montierten Zustand des Abdeckelementes am Lagerelement lösbar, kann ein defektes Halteelement ausgetauscht werden, ohne dass das Abdeckelement demontiert werden muss. Hierdurch können die Montage- bzw. Wartungszeit vorteilhaft und kostenreduzierend verkürzt werden.

Vorteilhafterweise weisen das erste Traglager und das zweite Traglager jeweils zumindest zwei korrespondierende Lagerstrukturen auf. Eines hiervon kann vorteilhafterweise eine bereichsweise offene Lagerstruktur sein. Unter "bereichsweise offen" soll verstanden werden, dass ein Bereich der Lagerstruktur so ausgestaltet ist, dass die korrespondierende Lagerstruktur bzw. ein bestimmter Bereich derselben in diesen Bereich der bereichsweise offenen Lagerstruktur eingreifen kann und/oder von dieser aufgenommen werden kann. Demgemäß weist die korrespondierende Lagerstruktur einen Bereich auf, der so ausgestaltet ist, dass er in den bereichsweise offenen Bereich der Lagerstruktur eingreifen kann und/oder von dieser aufgenommen werden kann. Die bereichsweise offene Lagerstruktur bzw. deren Bereich kann jede Form aufweisen, die dem Fachmann als einsetzbar erscheint, wie eine Vertiefung, eine Mulde, eine Kule, ein Schlitz, ein Spalt, ein Sackloch, eine Öffnung etc. Ferner kann die korrespondierende Lagerstruktur bzw. deren Bereich jede dem Fachmann für nutzbare Form aufweisen, wie beispielsweise, eine Wölbung, eine Kugel, ein Stift, ein Bolzen, ein Haken etc.

Zudem wird vorgeschlagen, dass das ortsfeste Lagerelement eine bereichsweise offene erste Lagerstruktur und/oder eine bereichsweise offene erste Lagerschale aufweisen kann, wodurch die Lagerung einfach und sicher erfolgen kann. Unter einer Lagerschale soll eine Struktur verstanden werden, die einen Bereich mit einer konkaven Vertiefung aufweist.

Ein platzsparender und kompakter Aufbau des ersten und des zweiten Traglagers (beispielsweise des Doppellagers) bzw. der gesamten Konstruktion kann vorteilhaft erreicht werden, wenn der erste Lagerpartner des beweglichen Abdeckelementes und die bereichsweise offene zweite Lagerschale des beweglichen Abdeckelementes einstückig miteinander ausgeführt sind. Unter "einstückig" soll verstanden werden, dass der erste Lagerpartner des beweglichen Abdeckelementes und die bereichsweise offene zweite Lagerschale des beweglichen Abdeckelementes nur unter Funktionsverlust zumindest eines der Elemente voneinander getrennt werden können und/oder dass der erste Lagerpartner des beweglichen Abdeckelementes und die bereichsweise offene zweite Lagerschale des beweglichen Abdeckelementes von demselben Bauteil gebildet/am selben Bauteil ausgeführt/ausgebildet sind.

Der bereichsweise offene Bereich der Lagerschale bzw. dessen genaue Erstreckung wird durch die Form des Lagerpartners wie auch durch einen erforderlichen Bewegungsspielraum sowie der Geometrie der beteiligten und auch umliegenden Bauteile bestimmt. Dies wird der Fachmann aufgrund seines Fachwissens selbständig auswählen.

Des Weiteren wird vorgeschlagen, dass der Öffnungsbereich der bereichsweise offenen ersten Lagerschale und/oder der bereichsweise offenen zweiten Lagerschale einen Winkelbereich kleiner als 180° überdeckt, insbesondere einen Winkelbereich kleiner als 135° überdeckt und insbesondere einen Winkelbereich von bevorzugt 90° überdeckt. Hierdurch kann ein genügend großer Schwenkwinkel erreicht werden, um das Abdeckelement und das Halteelement - gegebenenfalls auch einzeln voneinander - zu montieren oder zu demontieren. Ferner ist es so möglich eine stabile Klickverbindung bereitzustellen. In anderen Worten, ein Öffnungswinkel der bereichsweise offenen ersten Lagerschale und/oder ein Öffnungswinkel der bereichsweise offenen zweiten Lagerschale ist kleiner als 180°, insbesondere kleiner als 135° und insbesondere bevorzugt 90°. Folglich erstreckt sich der bereichsweise offene Bereich der ersten/zweiten Lagerschale über mehr als 180°, insbesondere mehr als 225° und insbesondere bevorzugt über 270°.

Es wird zudem vorgeschlagen, dass das bewegliche Abdeckelement einen bogenförmigen Bereich aufweist, welcher sich an den ersten Lagerpartner und/oder die zweite Lagerschale anschließt und/oder diesem/diesen nachfolgt. Durch den bogenförmigen Bereich kann die Konstruktion möglichst kleinbauend gestaltet werden. Um einen möglichst großen Bewegungsspielraum beim Drehen des Abdeckelementes zu ermöglichen, ist zwischen dem ersten Lagerpartner und/oder der zweiten Lagerschale und dem bogenförmigen Bereich als Übergangsstruktur ein gerader Schenkel angeordnet.

Bevorzugt kann sich der bogenförmige Bereich im Wesentlichen entlang eines Halbkreises erstrecken, wobei unter "im Wesentlichen entlang eines Halbkreises" verstanden werden soll, dass ein eingeschlossener Winkel zwischen 210° und 150° liegen kann. Bevorzugt ist der bogenförmige Bereich eine Halbkreisbiegung und/oder so ausgeführt, dass der Bereich eine 180° Richtungsumkehr des Verlaufen des Abdeckelementes in diesem Bereich bewirkt. Hiermit kann eine ausgewogene Balance zwischen einem möglichst großen Bewegungsspielraum beim Drehen des Abdeckelementes und einer kleinbauenden Konstruktion realisiert werden.

Gemäß einer bevorzugten Ausgestaltung der Erfindung weist das bewegliche Abdeckelement einen ersten Übergangsbereich auf, welcher sich an den bogenförmigen Bereich anschließt, wodurch ein Bewegungsspielraum weiter erhöht werden kann. Dieser erste Übergangsbereich erstreckt sich in einer ersten Richtung, welche sich im Wesentlichen in Richtung der zweiten Lagerschale bzw. des ersten Lagerpartners erstreckt. Unter "im Wesentlichen in Richtung erstrecken" soll verstanden werden, dass eine den Übergangsbereich verlängernde gedachte Linie und eine gedachte Linie durch einen Mittelpunkt der zweiten Lagerschale im Wesentlichen parallel zueinander verlaufen, wobei unter "im Wesentlichen parallel" verstanden werden soll, dass die Richtungen um ±20° von der strikten parallelen Ausrichtung abweichen können. Hierdurch verläuft der Übergangsbereich im Wesentlichen parallel zu dem geraden Schenkel, der sich zwischen der zweiten Lagerschale bzw. dem ersten Lagerpartner und dem bogenförmigen Bereich erstreckt.

Der erste Übergangsbereich kann bevorzugt als ein gerader Schenkel ausgebildet sein. Zudem weist dieser vorteilhafterweise eine weitere Abstützung für das Halteelement auf. Dadurch liegt das Halteelement zusätzlich zum zweiten Traglager auch am oder im Bereich des Übergangsbereiches an dem Abdeckelement an. Die Abstützung kann als Auflagefläche des Übergangselementes ausgebildet sein. Alternativ und/oder zusätzlich kann die Abstützung auch als eine separat geformte Struktur ausgeführt sein, wie beispielsweise einem Steg, Keil oder Absatz, der vom bogenförmigen Bereich im Wesentlichen in Richtung der zweiten Lagerschale weist. Durch die Kombination des bogenförmigen Bereiches, insbesondere durch eine 180° Halbkreisbiegung, des ersten Übergangsbereiches, als gerader verlängerter Schenkel, und der weiteren Abstützung kann verhindert werden, dass das Halteelement pendelt und z.B. gegen das Abdeckelement schlagen kann.

Eine weitere Ausgestaltung der Erfindung sieht vor, dass das bewegliche Abdeckelement einen zweiten Übergangsbereich aufweist, welcher sich an den ersten Übergangsbereich anschließt und sich in eine sich im Wesentlichen senkrecht zu der ersten Richtung erstreckende zweite Richtung erstreckt. Hierdurch kann eine Konstruktion des Abdeckelementes erreicht werden, die geringe bis keine Rückstellkräfte aufweist. Damit verbleibt das Abdeckelement im montierten Zustand in der gewünschten Position am Lagerelement. Unter "im Wesentlichen senkrecht" soll verstanden werden, dass die Richtungen um ±20° von der strikten senkrechten Ausrichtung abweichen können. Der erste Übergangsbereich und der zweite Übergangsbereich können einen spitzen Knick erzeugen/bilden. Hierdurch kann eine seitliche Kontur der gesamten Gepäckaufbewahrungseinheit formschön fortführt werden.

Des Weiteren kann es vorteilhaft sein, wenn das bewegliche Abdeckelement einen Endbereich aufweist, welcher sich an den zweiten Übergangsbereich anschließt. Hierdurch kann konstruktiv einfach eine - großflächig - abdeckende Struktur realisiert werden. Eine vorteilhafte Ausgestaltung kann hier ein gerader Schenkel ausgeführt als Abdeckplatte sein. Dieser Schenkel bzw. diese Platte erstreckt sich im Wesentlichen in der zweiten Richtung. Eine raumsparende Konstruktion kann erreicht werden, wenn eine gedachte, den Endbereich verlängernde Linie eine Tangente zum bogenförmigen Bereich ist. Bei entsprechender Ausgestaltung und Anordnung des Halteelementes kann hier auch ein möglichst großer Raum zwischen einem Haltebereich des Halteelementes (Details siehe unten) und dem Endbereich des Abdeckelementes gestaltet werden. Dies erleichtert vorteilhaft das Anhängen von Objekten an das Halteelement.

Das bewegliche Halteelement weist ein erstes Ende und ein zweites Ende auf. Ferner ist es vorteilhaft, wenn das erste Ende des beweglichen Halteelementes den zweiten Lagerpartner aufweist. Zweckmäßigerweise weist das zweite Ende des beweglichen Halteelementes einen Haltebereich zum Halten zumindest eines Objektes auf. Dadurch kann das Halteelement ausgewogen gestaltet werden. Unter einem Haltebereich soll der Bereich des Halteelementes verstanden werden, der die Haltefunktion ermöglicht/leistet/beinhaltet/vermittelt. Diese kann bevorzugt als ein - eckiger - Haken ausgebildet sein. Um eine Belastung des Halteelementes und des Abdeckelementes gering zu halten und/oder um eine an dem Haken hängebare Last bzw. eine auf den Haken potentiell wirkende Kraft konstruktiv sinnvoll zu kompensieren, ist das Halteelement so geformt, dass potentielle anliegende Kraftlinien senkrecht verlaufen, d.h. der Haltebereich des Halteelementes - dort wo das Gewicht hängt -lotrecht unter dem Auflagerpunkt des ortsfesten Lagerelementes liegt. Somit weist der Haltebereich des Halteelementes einen Krafteinleitungspunk auf, über den Gewichtskräfte in dem Haltebereich einleitbar sind und wobei eine Normale vom Krafteinleitungspunk zur Drehachse des zweiten Traglagers eine Senkrechte (bezogen auf die Erdoberfläche eine Vertikale) ist. Somit kann eine resultierende Gewichtskraft möglichst nahe an bzw. unterhalb von den Traglagern bzw. dem Auflagepunkt am ortsfesten Lagerelement angeordnet werden.

Zudem weist das bewegliche Halteelement einen Abschnitt auf, welcher zwischen dem ersten Ende und dem zweiten Ende angeordnet ist und/oder sich zwischen diesen erstreckt. Eine gute Kraftübertragung auf das ortsfeste Lagerelement kann ermöglicht werden, wenn der Abschnitt hakenförmig ausgebildet ist. Er kann beispielweise wie der obere Teil eines Fragezeichens (?) ausgebildet sein. Hierbei soll unter "dem oberen Teile eines Fragezeichens" der bogenförmige Bereich und der nach unten weisende gerade Schenkel verstanden werden (das Fragezeichen ohne den Punkt). In anderen Worten, der Abschnitt hat den Verlauf eines oberen Bereichs eines Fragezeichens. Hierbei sind der Lagerbereich (erstes Ende) und der Haltebereich des Halteelementes (zweites Ende) bevorzugt, ausgehend vom geraden Schenkel des Bereichs/Fragezeichens, in dieselbe Richtung gebogen.

In einer weiteren vorteilhaften Realisierung der Erfindung wird vorgeschlagen, dass das Halteelement einen bogenförmigen Bereich und ein den bogenförmigen Bereich abstützendes Stabilisierungselement aufweist. Hierdurch kann das Halteelement besonders robust gestaltet werden. Mittels des Stabilisierungselementes kann die Hauptlast in den Auflagepunkt am ortsfesten Lagerelement übertragen werden.

Das Stabilisierungselement kann jede dem Fachmann für sinnvoll erscheinende Konstruktion, Ausgestaltung, Struktur oder erscheinendes Element sein, wie beispielsweise ein Steg oder ein Vollmaterial im bogenförmigen Bereich. Bevorzugt ist das Stabilisierungselement eine Teilausfüllung im bogenförmigen Bereich, wobei eine gedachte Linie entlang einer Materialbegrenzung der Teilausfüllung eine Sekante zum bogenförmigen Bereich ist. Die Materialbegrenzung kann auch als ein Bogen ausgeführt sein.

Der bogenförmige Bereich des Halteelementes kann sich entlang des bogenförmigen Bereiches des Abdeckelementes erstrecken und/oder beide Bereiche können als Halbkreise ausgeführt sein, die einen gemeinsamen Kreismittelpunkt haben. Hierbei liegt der Halbkreis des Halteelementes bevorzugt an der weiteren Abstützung des Abdeckelementes an. Damit sind beide Elemente miteinander drehbar. Bei einem nötigen Wechsel des Abdeckelementes können beide Elemente ungehindert nach vorne geschwenkt und ausgehängt werden.

Ferner ist es vorteilhaft, wenn das Abdeckelement zumindest einen axial zur ersten Drehachse verlaufenden Lüftungsschlitz aufweist. Hierdurch kann eine optimale Lüftung trotz Abdeckelement realisiert werden. Somit ist das Abdeckelement geschlitzt, sodass durch diese Öffnungen Luft aus dem Fahrzeug für die Klimatisierung abgesaugt werden kann.

Vorteilhafterweise ist der Lüftungsschlitz im bogenförmigen Bereich des Abdeckelementes angeordnet. Hierdurch kann der sich an den bogenförmigen Bereich anschließende erste Übergangsbereich bzw. dessen gerader Schenkel eine weitere Funktion erfüllen, nämlich ein Abdecken der Lüftungsschlitze aus Sicht der Fahrgäste, also ein Sichtschutz von "unten" bieten. Die Kombination des bogenförmigen Verlaufes des Abdeckelementes, der ersten und zweiten Übergangselemente bzw. des Knickes ermöglicht vorteilhaft, dass ein Spalt, der sich zwischen dem Knick und einer Ecke oder dem Anschlag des gegenüberliegenden Lagerelementes bildet, und in dem das Halteelement verschiebbar ist, möglichst klein gehalten werden kann. Andernfalls könnten Fahrgäste am Fenster in einen Technikbereich "hinter" dem Abdeckelement einsehen.

Gemäß einer alternativen Realisierung der Erfindung kann das Halteelement in einer sich in einer Längsrichtung des Abdeckelementes erstreckenden C-Nut aufgenommen sein. Hierdurch kann eine einfache Konstruktion realisiert werden. Bevorzugterweise kann sich die Längsrichtung im Wesentlichen parallel zu der ersten Drehachse erstrecken. Ferner kann die C-Nut an dem Abdeckelement in einem Abstand zu dem ersten Traglager angeordnet sein. In anderen Worten, die C-Nut ist nicht im Lagerbereich des Abdeckelementes angeordnet sondern im Abdeckbereich, der zur Abdeckung dient. Zur Aufnahme des Halteelementes in der C-Nut weist das Halteelement eine mit der C-Nut korrespondierende Struktur, wie beispielsweise eine Zapfen oder eine Nase auf, welche in die C-Nut eingreift. Hierbei ist das Halteelement bevorzugt so in der C-Nut aufgenommen, dass das Halteelement axial bzw. in Längsrichtung verschiebbar ist.

Die oben beschriebenen Eigenschaften, Merkmale und Vorteile dieser Erfindung, sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Es zeigen:
- FIG 1: eine erfindungsgemäße Baueinheit mit einem ortsfesten Lagerelement, einem beweglichen Abdeckelement und einem beweglichen Halteelement,
- FIG 2: das Abdeckelement aus FIG 1 in einer perspektivischen Ansicht,
- FIG 3: das Halteelement aus FIG 1 in einer perspektivischen Ansicht,
- FIG 4: die Baueinheit aus FIG 1 mit gedrehtem Abdeckelement und gedrehtem Halteelement vor einer Demontage,
- FIG 5: in einer perspektivischen Frontansicht eine Bauteilanordnung bestehend aus dem ortsfesten Lagerelement aus FIG 1 mit mehreren montierten Bauteilgruppen bestehend aus je einem Abdeckelement und mehreren Halteelementen, wobei eine der Baugruppen gedreht gezeigt ist,
- FIG 6: die Bauteilanordnung aus FIG 5 in einer perspektivischen Rückansicht,
- FIG 7: eine alternative Baueinheit mit einem ortsfesten Lagerelement, einem alternativen beweglichen Abdeckelement und einem alternativen beweglichen Halteelement,
- FIG 8: die Baueinheit aus FIG 7 mit gedrehtem Abdeckelement und gedrehtem Halteelement vor einer Demontage,
- FIG 9: in einer perspektivischen Seitenansicht das Abdeckelement der FIG 7 mit mehreren montieren Halteelementen und
- FIG 10: eine weitere alternative Baueinheit mit einem ortsfesten Lagerelement, einem alternativen beweglichen Abdeckelement und einem alternativen beweglichen Halteelement.

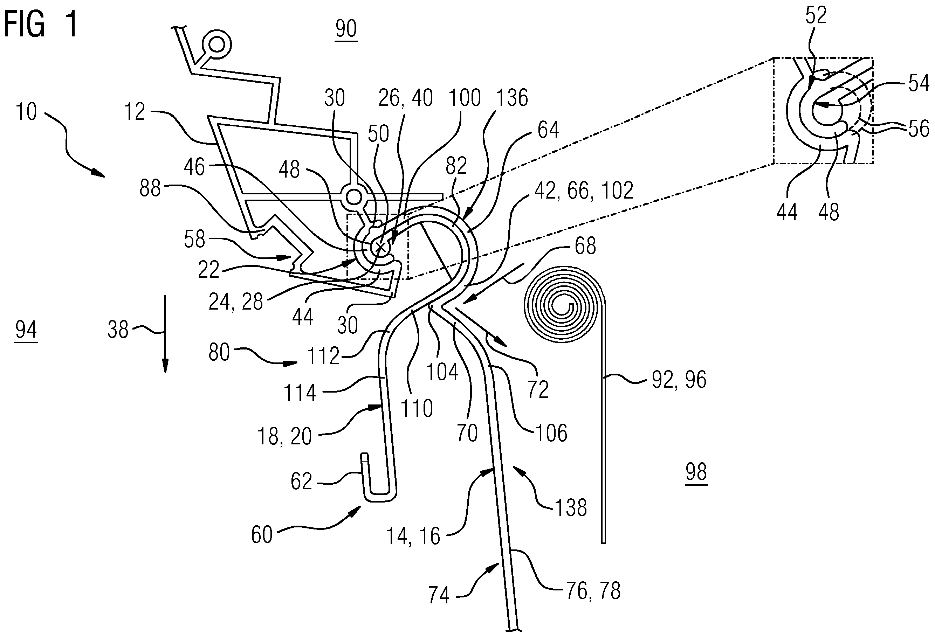

FIG 1 zeigt eine erfindungsgemäße Baueinheit 10 mit einem ortsfesten Lagerelement 12, einem beweglichen Abdeckelement 14 und einem beweglichen Halteelement 18. Das ortsfeste Lagerelement 10 ist ein Teil 88, wie beispielsweise ein Bodenelement einer Gepäckaufbewahrungseinheit 90, bspw. einer Gepäckablage. Eine solche Gepäckaufbewahrungseinheit 90 kann beispielsweise in einem Deckenseitenbereich eines Aufenthaltsraumes 94, wie einem Zugwaggon, einer mobilen Einheit, bspw. eines Zuges sein (nicht im Detail gezeigt).

Das bewegliche Abdeckelement 14 ist eine Abdeckung 16 bzw. eine Rolloabdeckung 16 einer Verschattungsanlage 92, wie beispielsweise eines Rollos 96 inclusive seiner Mechanik und Aufhängung. Die Verschattungsanlage 92 ist zwischen dem Abdeckelement 14 und einer Begrenzungswand 98 des Aufenthaltsraumes 94 angeordnet. Das Abdeckelement 14 dient dazu, die Verschattungsanlage 92 zu verdecken bzw. einen Bereich/Raum hinter dem Abdeckelement 14 uneinsehbar für Unbefugte, wie beispielsweise Zugfahrgästen, zu machen. Das bewegliche Abdeckelement 14 kann beispielsweise ein gerolltes Blech sein, ein Alu-Strangpressprofil sein oder aus einem Kunststoff, wie beispielsweise Pultrodat, gefertigt sein.

Das Halteelement 18 ist als ein Haken 20 bzw. ein Kleiderhaken 20 ausgebildet und dient dazu, dass beispielsweise ein Fahrgast ein Objekt, wie beispielsweise eine Jacke, eine Tasche, einen Regenschirm etc. (nicht gezeigt) daran aufhängen kann. Das bewegliche Halteelement 18 ist beispielsweise ein Spritzgussteil oder aus Metall gefertigt.

Das Abdeckelement 14 und das Halteelement 18 sind so ausgeführt, dass das Abdeckelement 14 ungehindert vom Halteelement 18 an das oder vom ortsfesten Lagerelement 12 montiert und demontiert werden kann. Dies wird ermöglicht indem das bewegliche Abdeckelement 14 unter Verwendung eines ersten Traglagers 22 gegenüber dem ortsfesten Lagerelement 12 drehbar um eine erste Drehachse 24 gelagert ist und das bewegliche Halteelement 16 unter Verwendung eines zweiten Traglagers 26 gegenüber dem ortsfesten Lagerelement 12 drehbar um eine zweite Drehachse 28 gelagert ist und indem die erste Drehachse 24 und die zweite Drehachse 28 koaxial zueinander sind. Folglich können hierdurch das Abdeckelement 14 und das Halteelement 18 zusammen gedreht werden, was eine Montage oder eine Demontage erleichtert und beschleunigt.

Zur Lagerung des Abdeckelementes 14 weist das ortsfeste Lagerelement 12 eine bereichsweise offene erste Lagerschale 44 auf, in welcher ein in die bereichsweise offene erste Lagerschale 44 einsetzbarer Lagerpartner 46 des beweglichen Abdeckelementes 14 drehbar aufgenommen ist. Ferner weist das bewegliche Abdeckelement 14 zur Lagerung des Halteelementes 18 einen Lagerbereich 136 mit einer bereichsweise offenen zweiten Lagerschale 48 auf, in welcher ein zweiter in die bereichsweise offene zweite Lagerschale 48 einsetzbarer Lagerpartner 50 des beweglichen Halteelementes 18 drehbar aufgenommen ist. Hierbei sind bauraumsparend der erste Lagerpartner 46 und die bereichsweise offenen zweite Lagerschale 48 des beweglichen Abdeckelementes 14 einstückig miteinander ausgeführt, d.h. sind vom selben Bauteil gebildet.

Wie in der Detailvergrößerung der FIG 1 zu sehen ist, überdecken der Öffnungsbereich 52 der bereichsweise offenen ersten Lagerschale 44 und der Öffnungsbereich 54 der bereichsweise offenen zweiten Lagerschale 48 einen Winkelbereich 56 beispielsweise kleiner als 180°, insbesondere kleiner als 135° und insbesondere bevorzugt von 90°. Die Winkelbereiche 56 sind in der FIG 1 als Bögen angedeutet. Die erste Lagerschale 44 und die zweite Lagerschale 48 erstrecken sich somit beispielsweise über mehr als 180°, insbesondere mehr als 225° und insbesondere bevorzugt über 270°.

Das bewegliche Abdeckelement 14 und das bewegliche Halteelement 18 sind derart ausgebildet, dass das erste Traglager 22 und das zweite Traglager 26 nur Radialkräfte in der gleichen Radialrichtung 38 aufnehmen können.

Das Halteelement 18 im montierten Zustand sowohl im Abdeckelement 14 wie auch am Lagerelement 12 ist drehfest im Abdeckelement 14 aufgenommen. Lediglich bei einer Montage oder Demontage des Halteelementes 18 aus dem Abdeckelement 14 ist das Halteelement 18 drehbar zum Abdeckelement 14. Jedoch ist das zweite Traglager 26 als ein radiales Gleitlager 40 ausgebildet, wodurch das Halteelement 18 axial in Richtung der Drehachse 28 verschieblich gelagert ist.

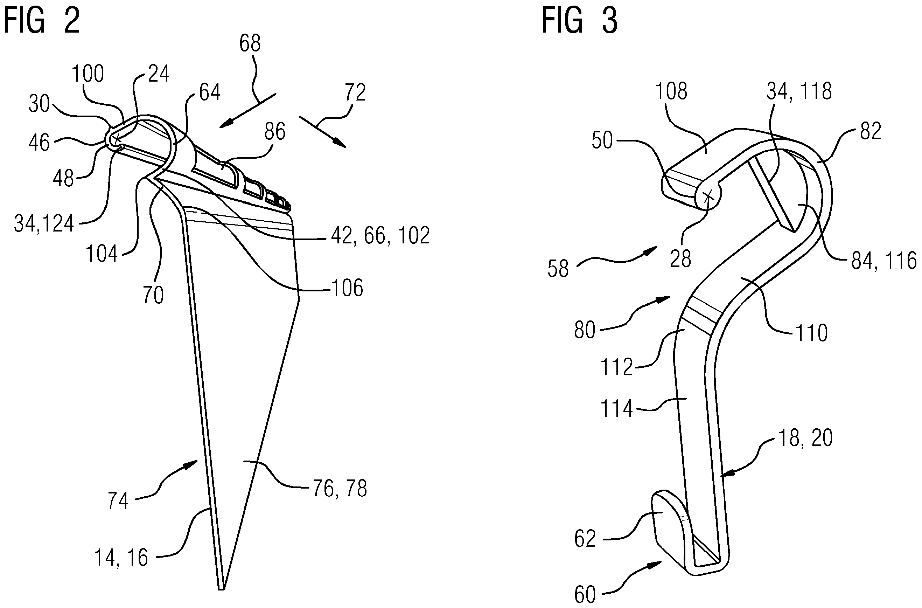

In den FIG 2 und 3 sind das Abdeckelement 14 und das Halteelement 18 jeweils in einer perspektivischen Ansicht gezeigt. Anschließend an den ersten Lagerpartner 46 bzw. die zweite Lagerschale 48 weist das bewegliche Abdeckelement 14 einen geraden Schenkel 100 auf. Diesem schließt sich ein bogenförmiger Bereich 64 an, welcher somit dem ersten Lagerpartner 46 bzw. der zweiten Lagerschale 48 nachfolgt. Ferner weist das bewegliche Abdeckelement 14 einen ersten Übergangsbereich 66 auf, welcher sich an den bogenförmigen Bereich 64 anschließt. Dieser Übergangsbereich 66 ist als gerader Schenkel 102 ausgebildet und erstreckt sich in eine erste Richtung 68 und im Wesentlichen in Richtung der zweiten Lagerschale 48.

Zudem weist das bewegliche Abdeckelement 14 einen zweiten Übergangsbereich 70 auf, welcher sich an den ersten Übergansbereich 66 anschließt und sich in eine zweite Richtung 72 erstreckt, welche sich wiederum im Wesentlichen senkrecht zu der ersten Richtung 68 erstreckt. Die zwei Übergangsbereiche 66, 70 bilden einen Knick 104 wodurch ein seitliches Profil der Gepäckaufbewahrungseinheit 90 weitergeführt ist. Des Weiteren weist das bewegliche Abdeckelement 14 einen Endbereich 74 auf, welcher sich an den zweiten Übergangsbereich 70 anschließt und als Abdeckbereich 138 dient. Hierbei geht der zweite Übergangsbereich 70 mit einem leichten Bogen 106 in den Endbereich 74 über. Die Richtungsänderung bzw. die Orientierung des Endbereiches 74 ist hierbei so gewählt, dass eine gedachte, den Endbereich 74 verlängernde Linie eine Tangente zum bogenförmigen Bereich 66 darstellt. Der Endbereich 74 ist als ein gerader Schenkel 76 ausgeführt und als eine Abdeckplatte 78 ausgebildet.

Um ein funktionierendes Lüftungs- und Kühlkonzept bereitzustellen, weist das bewegliche Abdeckelement 14 im bogenförmigen Bereich 64 mehrere axial zur ersten Drehachse 24 verlaufende und axial hintereinander angeordnete Lüftungsschlitze 86 auf. Hierbei verdeckt der erste Übergangsbereich 66 bzw. der Knick 104 aus Sicht des Fahrgastes die Lüftungsschlitze 86.

Das bewegliche Halteelement 18 weist ein erstes (oberes) Ende 58 und ein zweites (unteres) Ende 60 auf. Das erste Ende 58 weist den zweiten Lagerpartner 50 auf. Zwischen dem ersten Ende 58 und dem zweiten Ende 60 erstreckt sich ein Abschnitt 80, der hakenförmig oder wie der obere Teil eines Fragezeichens - ? - ausgebildet ist. Somit weist der Abschnitt 80 bzw. das Halteelement 18 einen geraden Schenkel 108, einen bogenförmigen Bereich 82, an diesen anschließend einen geraden Schenkel 110, einen ca. 90° Bogen 112 und einen weiteren geraden Schenkel 114 auf. Das zweite Ende 60 hingegen weist einen Haltebereich 62 zum Halten des Objektes auf, welcher sich an den geraden Schenkel 114 anschließt. Der Haltebereich 62 ist beispielsweise als eckiger Haken ausgebildet. Hierbei sind das erstes Ende 58 und der Haltebereich 62 des Halteelementes 18, ausgehend vom geraden Schenkel 114 des hakenförmigen Bereiches 80 (Fragezeichens ?) in dieselbe Richtung (Richtung 68) gebogen.

Zur Stabilisierung weist das bewegliche Halteelement 18 ein den bogenförmigen Bereich 82 abstützendes Stabilisierungselement 84 auf. In diesem exemplarischen Ausführungsbeispiel ist das Stabilisierungselement 84 eine Teilausfüllung im bogenförmigen Bereich 82. Die Teilausfüllung ist schmäler als eine Dicke des Halteelementes 18 und als Steg 116 ausgeformt. In diesem exemplarischen Ausführungsbeispiel bildet eine gedachte Linie entlang einer Materialbegrenzung 118 der Teilausfüllung eine Sekante zum bogenförmigen Bereich 82.

Das Halteelement 18 ist so gestaltet, dass der Haltebereich 62 einen Krafteinleitungspunk aufweist, über den Gewichtskräfte in dem Haltebereich 62 einleitbar sind und wobei eine Normale vom Krafteinleitungspunk zur Drehachse 28 des zweiten Traglagers 26 eine Senkrechte (bezogen auf die Erdoberfläche eine Vertikale) ist.

Der bogenförmige Bereich 82 des Halteelementes 18 erstreckt sich entlang des bogenförmigen Bereiches 64 des Abdeckelementes 14. Damit sind beide Bereiche 64, 82 als Halbkreise ausgeführt, die einen gemeinsamen Kreismittelpunkt haben. Hierbei liegt der Halbkreis des Halteelementes 18 zusätzlich zum zweiten Traglager 26 an einer weiteren Abstützung 42 des Abdeckelementes 14 an. Die Abstützung 42 ist als Auflagefläche des Übergangsbereiches 66 ausgebildet.

Das bewegliche Halteelement 18 ist am beweglichen Abdeckelement 14 formschlüssig insbesondere durch die Abstützung 42 abstützbar.

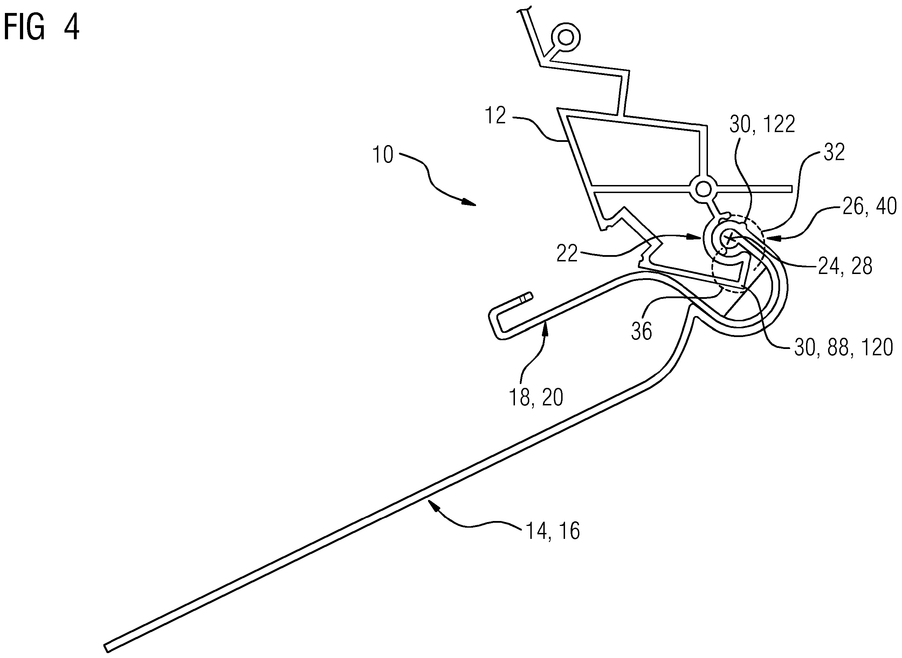

Damit sind beide Elemente 14, 18 miteinander drehbar. Bei einem nötigen Wechsel des Abdeckelementes 14 können beide Elemente 14, 18 ungehindert nach vorne geschwenkt und ausgehängt werden (siehe auch FIG 4).

Durch die spezielle Konstruktion des Abdeckelementes 14 und des Halteelementes 18 und durch die spezielle Lagerung des Halteelemenets 18 am Abdeckelement 14 kann zum einen erreicht werden, dass eine Hauptlast am Halteelement 18 in einen gemeinsamen Auflagepunkt des Abdeckelementes 14 und des Halteelementes 18 am Lagerelement 12 übertragen wird. Zum anderen können Rückstellkräfte des Abdeckelementes minimiert werden. Ferner kann ein Objekt komfortabel aufgehängt werden, da genügend Raum/Platz zwischen dem Endbereich 74 des Abdeckelementes 14 und des geraden Schenkels 114 des Halteelementes 18 gegeben ist. Des Weiteren kann ein Pendeln des Haltelementes verhindert werden, wodurch dieses nicht, beispielsweise im Fahrbetrieb des Zuges, an das Abdeckelement 14 anschlägt.

In der FIG 4 ist die Baueinheit 10 in einem gedrehten oder geschwenkten Zustand zu sehen. In diesem Zustand kann das Abdeckelement 14 zusammen mit dem an das Abdeckelement 14 montierten Halteelement 18 demontiert werden. Wie aus Figur 4 zu sehen ist, ist die Drehung des beweglichen Abdeckelementes 14 im ersten Traglager 22, beispielsweise unter Verwendung mehrerer erster Begrenzungselemente 30, auf einen ersten Drehwinkelbereich 32 begrenzt. Ein Begrenzungselement 30 bei der Demontage kann beispielsweise eine Ecke 120 des Teils 88 der Lagerelementes 12 sein. Ein Begrenzungselement 30 bei der Montage kann beispielsweise eine Wölbung 122 im Bereich des ersten Lagerpartners 46 des Abdeckelementes 14 sein.

Auch die Drehung des beweglichen Halteelementes 18 im zweiten Traglager 26 beispielsweise bei der Demontage des Halteelementes 18 von dem Abdeckelement 14 ist auf einen zweiten Drehwinkelbereich 36 begrenzt, beispielsweise unter Verwendung mehrerer zweiter Begrenzungselemente 34. Ein Begrenzungselement 34 des Halteelementes 18 kann beispielsweise die Materialbegrenzung 118 des Stabilisierungselementes 84 sein. Ein Begrenzungselement 32 des Abdeckelementes 14 kann beispielsweise ein radialinneres Ende 124 der zweiten Lagerschale 48 sein (siehe FIG 2 und 3). Die Drehwinkelbereiche 32, 36 sind in der FIG 4 als Bögen angedeutet.

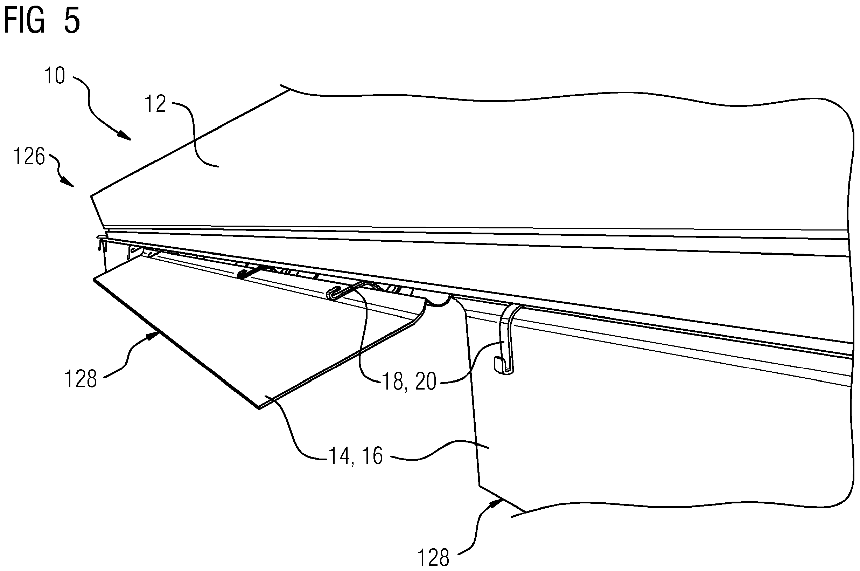

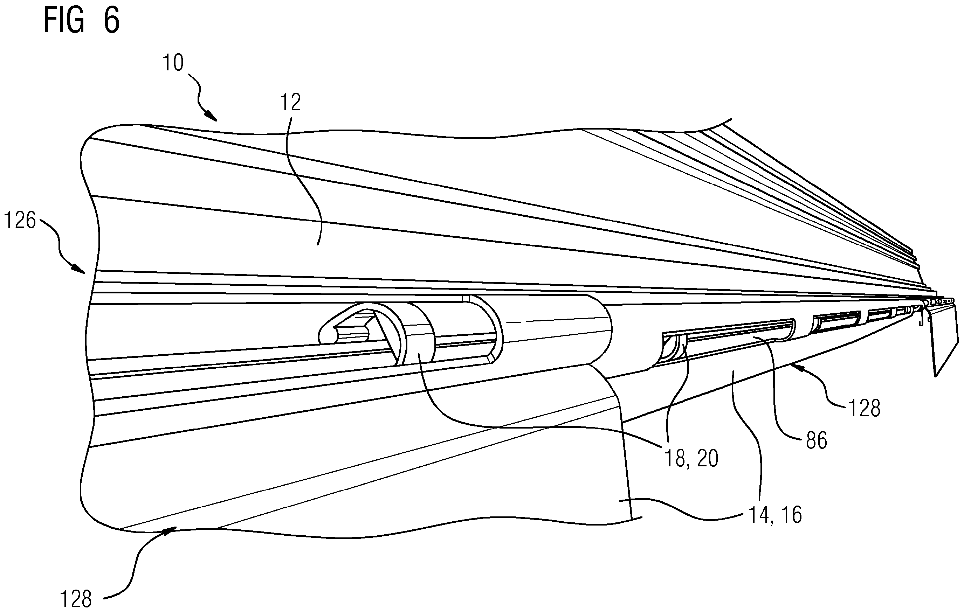

Die FIG 5 und 6 zeigen eine perspektivische Front- bzw. Rückansicht einer Bauteilanordnung 126 bestehend aus der Baueinheit 10 bzw. dem ortsfesten Lagerelement 12 mit mehreren montierten Bauteilgruppen 128 bestehend aus je einem Abdeckelement 14 und mehreren Halteelementen 18, wobei eine der Baugruppen 128 gedreht gezeigt ist.

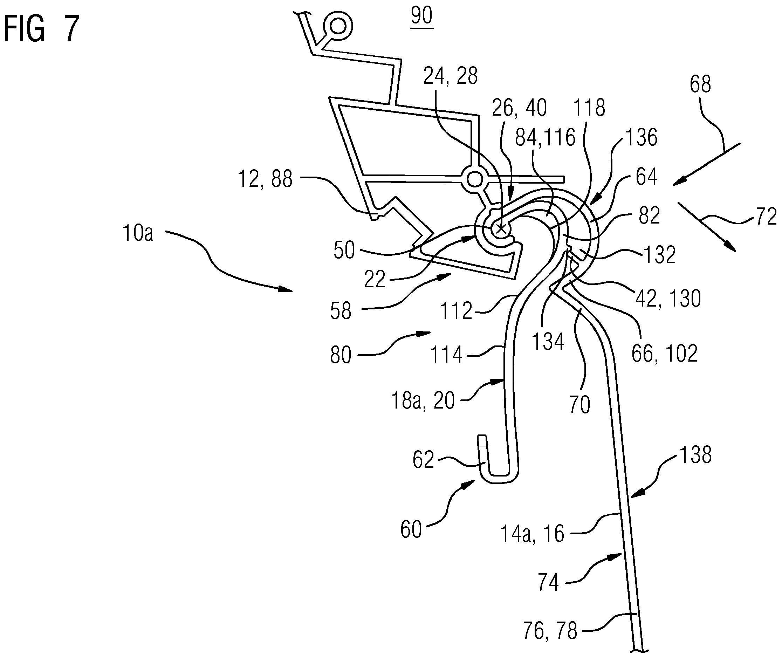

In den FIG 7 bis 10 sind zwei alternative Ausführungsbeispiele der Baueinheit 10 bzw. des beweglichen Abdeckelementes 14 und des Halteelementes 18 dargestellt. Im Wesentlichen sind gleich bleibende Bauteile, Merkmale und Funktionen grundsätzlich mit den gleichen Bezugszeichen beziffert. Zur Unterscheidung der Ausführungsbeispiele sind jedoch den Bezugszeichen der alternativen Ausführungsbeispiele der Buchstaben a bzw. b hinzugefügt. Die nachfolgende Beschreibung beschränkt sich im Wesentlichen auf die Unterschiede zu dem Ausführungsbeispiel in den FIG 1 bis 6, wobei bezüglich gleich bleibender Bauteile, Merkmale und Funktionen auf die Beschreibung des Ausführungsbeispiels in den FIG 1 bis 6 verwiesen werden kann.

Die FIG 7 zeigt eine alternative Baueinheit 10a mit einem ortsfesten Lagerelement 12, wie einem Teil 88 einer Gepäckaufbewahrungseinheit 90, einem beweglichen Abdeckelement 14a, ausgeführt als Rolloabdeckung 16, und einem beweglichen Halteelement 18a, ausgeführt als Haken bzw. Kleiderhaken 20.

Eine um eine Drehachse 24 drehbare Lagerung des Abdeckelementes 14a am Lagerelement 12 und eine um eine Drehachse 28 drehbare Lagerung des Haltelementes 18a am Abdeckelement 14a im Bereich des Lagerelementes 12 erfolgt über ein erstes und ein zweites Traglager 22, 26 analog zu der in den FIG 1 bis 6 beschriebenen Baueinheit 10. Zudem ist das Abdeckelement 14a im Wesentlichen analog zu dem Abdeckelement 14 der FIG 1 bis 6 geformt. Jedoch weist diese in einem Bereich an einem Übergang zwischen einem bogenförmigen Bereich 64 und einem Übergangsbereich 66 bzw. einem geraden Schenkel 102 eine Abstützung 42 für das Halteelement 18a auf, die als radialer Steg 130 ausgebildet ist (Details siehe unten).

Das Haltelement 18a weist analog zu dem Halteelement 18 der FIG 1 bis 6 an seinem ersten Ende 58 einen Lagerpartner 50, an seinem zweiten Ende 60 einen Haltebereich 62 und einen im Wesentlichen hakenförmigen bzw. fragezeichenförmigen Abschnitt 80, der sich zwischen dem ersten Ende 58 und dem zweiten Ende 60 erstreckt, auf. Ein bogenförmiger Bereich 82 des Abschnittes 80 und ein Bogen 112 zwischen dem bogenförmigen Bereich 82 und einem geraden Schenkel 114 sind weniger ausgebildet im Vergleich zu den äquivalenten Elementen des Halteelements 18 der FIG 1 bis 6. Hierdurch ergibt sich zwischen einem bogenförmigen Bereich 64 des Abdeckelementes 14a und dem bogenförmigen Bereich 82 des Halteelementes 18a ein radialer Spalt 132. In diesen Spalt 132 ragt der Steg 130 der Abstützung 42.

Zu einer Abstützung des Halteelementes 18a an dem Abdeckelement 14a bzw. an dessen Abstützung 42 (Steg 130) weist das Halteelement 18a an seinem bogenförmigen Bereich 82 ein zu dem Steg 130 korrespondierenden radialen Fortsatz 134 auf. Durch die Wechselwirkung des Steges 130 mit dem Fortsatz 134 wird das Haltelement 18a im montierten Zustand des Halteelementes 18a an dem Abdeckelement 14a bzw. des Abdeckelementes 14a am Lagerelement 12 formschlüssig gehalten. Ferner kann das Haltelement 18a so gemeinsam mit dem Abdeckelement 14a beispielsweise bei einer Demontage gedreht werden.

Zur Stabilisierung des Halteelementes 18a weist dieses im bogenförmigen Bereich 82 ein Stabilisierungselement 84 in der Form eines schmalen Bogens zur Teilausfüllung des bogenförmigen Bereichs 82 auf. Hierbei ist eine Materialbegrenzung 118 als ein Bogen ausgeführt. Das Stabilisierungselement 84 bzw. dessen Bogen (Materialbegrenzung 118) erstrecht sich auf einer Innenseite des bogenförmiger Bereiches 82 vom Lagerpartner 50 bis auf die Höhe des Fortsatzes 134. Somit sind das Stabilisierungselement 84 und der Fortsatz 134 auf unterschiedlichen Seiten des bogenförmigen Bereiches 82 angeordnet.

Bei dieser Konstruktion kann das Haltelement 18a im montierten Zustand des Abdeckelementes 14a an dem Lagerelement 12 vom Abdeckelement 14a durch "Ausklicken" gelöst werden. Dabei wird das Halteelement 18a im zweiten Traglager 26 relativ zum dann ortsfesten Abdeckelement 14a gedreht (nicht gezeigt).

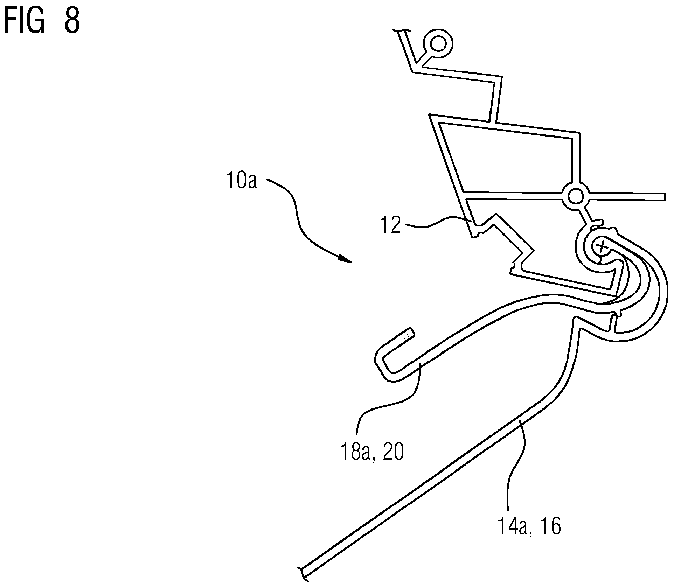

In der FIG 8 ist die Baueinheit 10a mit gedrehtem Abdeckelement 14a und gedrehtem Halteelement 18a vor einer gemeinsamen Demontage der beiden Elemente 14a, 18a zusammen gezeigt.

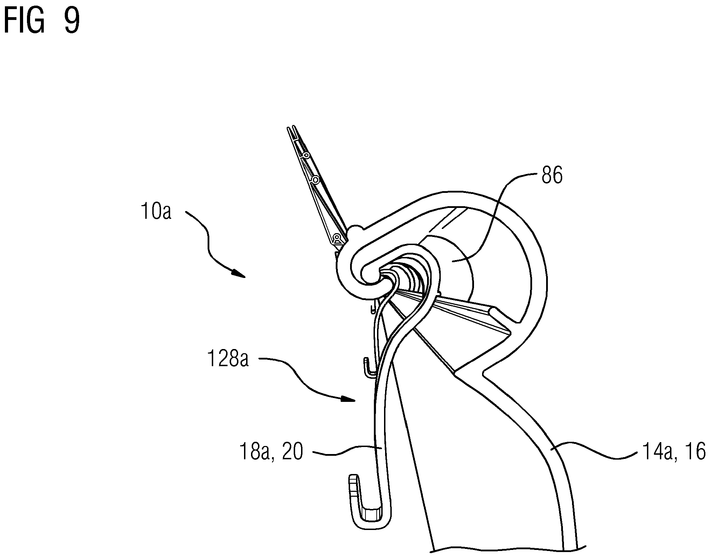

FIG 9 zeigt eine Bauteilgruppe 128a aus dem Abdeckelement 14a und mehreren am Abdeckelement 14a montieren Halteelementen 18a in einer perspektivischen Seitenansicht.

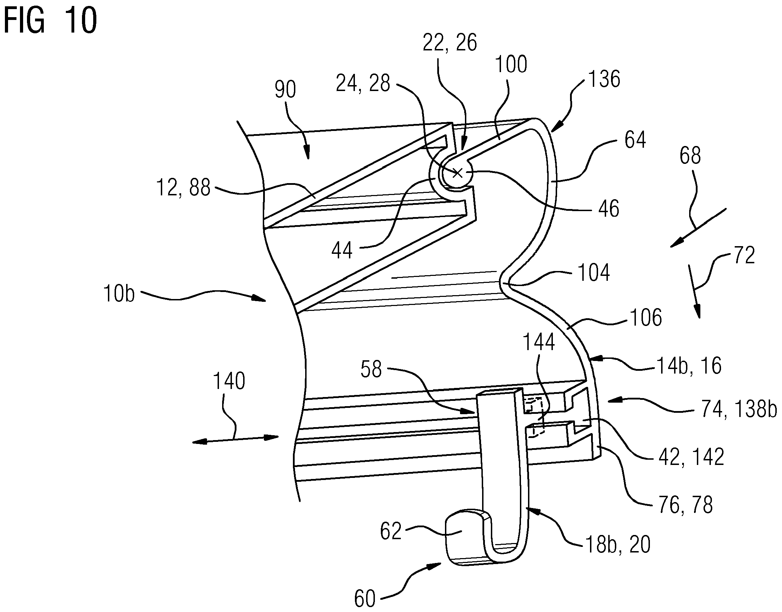

Die FIG 10 zeigt eine alternative Baueinheit 10b mit einem ortsfesten Lagerelement 12, wie einem Teil 88 einer Gepäckaufbewahrungseinheit 90, einem beweglichen Abdeckelement 14b, ausgeführt als Rolloabdeckung 16, und einem beweglichen Halteelement 18b, ausgeführt als Haken bzw. Kleiderhaken 20.

Eine um eine Drehachse 24 drehbare Lagerung des Abdeckelementes 14b am Lagerelement 12 und eine um eine Drehachse 28 drehbare Lagerung des Haltelementes 18b am Abdeckelement 14b im Bereich des Lagerelementes 12 erfolgt über ein erstes und ein zweites Traglager 22, 26, wobei hier im Gegensatz zu den in den FIG 1 bis 6 bzw. 7 bis 9 beschriebenen Konstruktionen die beiden Traglager 22, 26 zusammenfallen bzw. von demselben Traglager 22, 26 gebildet sind. Zudem ist ein Lagerbereich 136 des Abdeckelementes 14b im Wesentlichen analog zu dem Abdeckelement 14 der FIG 1 bis 6 bzw. 7 bis 9 ausgebildet.

Das alternative Ausführungsbeispiel der FIG 10 unterscheidet sich von den Ausführungsbeispielen der FIG 1 bis 6 bzw. 7 bis 9 in der Ausgestaltung des Abdeckbereiches 138b und der Art einer Aufnahme des Halteelementes 18b am Abdeckelement 14b. Zu dieser Aufnahme weist das Abdeckelement 14b eine C-Nut 142 auf, die sich in einer Längsrichtung 140 des Abdeckelementes 14b erstreck. Hierbei erstreckt sich die Längsrichtung 140 im Wesentlichen parallel zu der ersten bzw. zweiten Drehachse 24, 28. Durch die Anordnung der C-Nut 142 im Abdeckbereich 138b ist die C-Nut 142 an dem Abdeckelement 14b in einem Abstand zu dem ersten bzw. zweiten Traglager 22, 26 angeordnet. In anderen Worten, die C-Nut 142 ist nicht im Lagerbereich 136 des Abdeckelementes 14b angeordnet, sondern in einem Schenkel 76 des Endbereiches 74, welcher von einem Knick 104 vom Lagerbereich 136 getrennt ist.

Zur Aufnahme des Halteelementes 18b in der C-Nut 142 weist das Halteelement 18b eine mit der C-Nut 142 korrespondierende Struktur in der Form eines Zapfes 144 auf, welcher in die C-Nut 142 eingreift. Hierbei ist das Halteelement 18b so in der C-Nut 142 aufgenommen bzw. gelagert, dass das Halteelement 18b axial bzw. in Längsrichtung 140 verschiebbar ist. Der Zapfen 144 ist am ersten (oberen) Ende 58 des Halteelementes 18b ausgeformt, wohingegen der Haltebereich 62 am zweiten (unteren) Ende 60 des Halteelementes 18b ausgebildet ist. Der Zapfen 144 und der Haltebereich 62 weisen im Wesentlichen in entgegengesetzte Richtungen.

## Patentansprüche

1. Baueinheit (10, 10a, 10b) aufweisend zumindest ein ortsfestes Lagerelement (12), ein bewegliches Abdeckelement (14, 14a, 14b), insbesondere eine Rolloabdeckung (16), und zumindest ein bewegliches Halteelement (18, 18a, 18b), insbesondere einen Haken (20), wobei das bewegliche Abdeckelement (14, 14a, 14b) unter Verwendung eines ersten Traglagers (22) gegenüber dem ortsfesten Lagerelement (12) drehbar um eine erste Drehachse (24) gelagert ist und das bewegliche Halteelement (18, 18a, 18b) unter Verwendung eines zweiten Traglagers (26) gegenüber dem ortsfesten Lagerelement (12) drehbar um eine zweite Drehachse (28) gelagert ist, wobei die erste Drehachse (24) und die zweite Drehachse (28) koaxial zueinander sind,
**dadurch gekennzeichnet, dass**
das ortsfeste Lagerelement (12) eine bereichsweise offene erste Lagerschale (44) aufweist, in welcher ein in die bereichsweise offene erste Lagerschale (44) einsetzbarer Lagerpartner (46) des beweglichen Abdeckelementes (14, 14a, 14b) drehbar aufgenommen ist und das bewegliche Abdeckelement (14, 14a) eine bereichsweise offene zweite Lagerschale (48) aufweist, in welcher ein zweiter in die bereichsweise offene zweite Lagerschale (48) einsetzbarer Lagerpartner (50) des beweglichen Halteelementes (18, 18a) aufgenommen ist.

2. Baueinheit nach Anspruch 1, **dadurch gekennzeichnet, dass** die Drehung des beweglichen Abdeckelementes (14, 14a, 14b) im ersten Traglager (22), insbesondere unter Verwendung eines ersten Begrenzungselementes (30) oder mehrerer erster Begrenzungselemente (30), auf einen ersten Drehwinkelbereich (32) begrenzt ist und/oder die Drehung des beweglichen Halteelementes (18, 18a, 18b) im zweiten Traglager (26), insbesondere unter Verwendung eines zweiten
Begrenzungselementes (34) oder mehrerer zweiter Begrenzungselemente (34), auf einen zweiten Drehwinkelbereich (36) begrenzt ist.

3. Baueinheit nach Anspruch 1 oder 2, **dadurch gekennzeichnet, dass**
das bewegliche Abdeckelement (14, 14a) und/oder das bewegliche Halteelement (18, 18a) derart ausgebildet ist/sind, dass das erste Traglager (22) und das zweite Traglager (26) nur Radialkräfte in der gleichen Radialrichtung (38) aufnehmen können.

4. Baueinheit nach zumindest einem der vorhergehenden Ansprüchen, **dadurch gekennzeichnet, dass**
das zweite Traglager (26) als ein radiales Gleitlager (40) ausgebildet ist.

5. Baueinheit nach zumindest einem der vorhergehenden Ansprüchen, **dadurch gekennzeichnet, dass**
das bewegliche Halteelement (18, 18a, 18b) am beweglichen Abdeckelement (14, 14a, 14b) formschlüssig und/oder kraftschlüssig, insbesondere durch eine Abstützung (42), abstützbar ist.

6. Baueinheit zumindest nach einem der Ansprüche 1 bis 5, **dadurch gekennzeichnet, dass**
der erste Lagerpartner (46) des beweglichen Abdeckelementes (14, 14a) und die bereichsweise offenen zweite Lagerschale (48) des beweglichen Abdeckelementes (14, 14a) einstückig miteinander ausgeführt sind.

7. Baueinheit zumindest nach einem der Ansprüche 1 bis 5, **dadurch gekennzeichnet, dass**
der Öffnungsbereich (52) der bereichsweise offenen ersten Lagerschale (44) und/oder der Öffnungsbereich (54) der bereichsweise offenen zweiten Lagerschale (48) einen Winkelbereich (56) kleiner als 180° überdeckt, insbesondere kleiner als 135° überdeckt und insbesondere bevorzugt 90° überdeckt.

8. Baueinheit zumindest nach einem der Ansprüche 1 bis 5, **dadurch gekennzeichnet, dass**
das bewegliche Halteelement (18, 18a, 18b) ein erstes Ende (58) und ein zweites Ende (60) aufweist und/oder wobei das erste Ende (58) den zweiten Lagerpartner (50) aufweist und/oder wobei das zweite Ende (60) einen Haltebereich (62) zum Halten zumindest eines Objektes aufweist.

9. Baueinheit nach zumindest einem der vorhergehenden Ansprüchen, **dadurch gekennzeichnet, dass**
das bewegliche Halteelement (18, 18a, 18b) ein Spritzgussteil oder aus Metall ist und/oder das bewegliche Abdeckelement (14, 14a, 14b) aus einem Material gefertigt ist aus der Gruppe bestehend aus: gerolltem Blech, ein Alu-Strangpressprofil und ein Kunststoff, insbesondere Pultrodat.

10. Baueinheit nach zumindest einem der vorhergehenden Ansprüchen, **dadurch gekennzeichnet, dass**
das bewegliche Halteelement (18, 18a) ein erstes Ende (58), ein zweites Ende (60) und einen Abschnitt (80) zwischen dem ersten Ende (58) und dem zweiten Ende (60) aufweist, wobei der Abschnitt (80) hakenförmig ausgebildet ist.

11. Baueinheit nach zumindest einem der vorhergehenden Ansprüchen, **dadurch gekennzeichnet, dass**
das bewegliche Halteelement (18, 18a) einen bogenförmigen Bereich (82, 82a) und ein den bogenförmigen Bereich (82, 82a) abstützendes Stabilisierungselement (84, 84a) aufweist.

12. Baueinheit nach zumindest einem der vorhergehenden Ansprüchen, **dadurch gekennzeichnet, dass**
das bewegliche Halteelement (18b) in einer sich in einer Längsrichtung (140) des beweglichen Abdeckelementes (14b) erstreckenden C-Nut (142) aufgenommen ist.

13. Baueinheit nach Anspruch 12, **dadurch gekennzeichnet, dass**
die C-Nut (142) an dem beweglichen Abdeckelement (14b) in einem Abstand zu dem ersten und zweiten Traglager (22, 26) angeordnet ist.

14. Baueinheit nach zumindest einem der vorhergehenden Ansprüchen, **dadurch gekennzeichnet, dass**
das ortsfeste Lagerelement (12) ein Teil (88) einer Gepäckaufbewahrungseinheit (90) ist und/oder das bewegliche Abdeckelement (14, 14a, 14b) eine Abdeckung (16) einer Verschattungsanlage (92) ist und/oder das bewegliche Halteelement (18, 18a, 18b) ein Kleiderhaken (20) ist.

## Claims

1. Structural unit (10, 10a, 10b) having at least one positionally fixed bearing element (12), a movable covering element (14, 14a, 14b), in particular a roller blind covering (16), and at least one movable holding element (18, 18a, 18b), in particular a hook (20), wherein the movable covering element (14, 14a, 14b) is mounted about a first axis of rotation (24) so as to be rotatable with respect to the positionally fixed bearing element (12) using a first support bearing (22) and the movable holding element (18, 18a, 18b) is mounted about a second axis of rotation (28) so as to be rotatable with respect to the positionally fixed bearing element (12) using a second support bearing (26), wherein the first axis of rotation (24) and the second axis of rotation (28) are coaxial to one another,
**characterized in that**
the positionally fixed bearing element (12) has a part-open first bearing shell (44) in which a bearing partner (46) of the movable covering element (14, 14a, 14b) that can be inserted into the part-open first bearing shell (44) is rotatably received and the movable covering element (14, 14a) has a part-open second bearing shell (48) in which a second bearing partner (50) of the movable holding element (18, 18a) that can be inserted into the part-open second bearing shell (48) is received.

2. Structural unit according to Claim 1, **characterized in that**
the rotation of the movable covering element (14, 14a, 14b) in the first support bearing (22) is limited, in particular using a first limiting element (30) or a plurality of first limiting elements (30), to a first angle-of-rotation range (32) and/or the rotation of the movable holding element (18, 18a, 18b) in the second support bearing (26) is limited, in particular using a second limiting element (34) or a plurality of second limiting elements (34), to a second angle-of-rotation range (36) .

3. Structural unit according to Claim 1 or 2, **characterized in that**
the movable covering element (14, 14a) and/or the movable holding element (18, 18a) are/is designed in such a way that the first support bearing (22) and the second support bearing (26) can take up any radial forces in the same radial direction (38) .

4. Structural unit according to at least one of the preceding claims, **characterized in that**
the second support bearing (26) is designed as a radial sliding bearing (40).

5. Structural unit according to at least one of the preceding claims, **characterized in that**
the movable holding element (18, 18a, 18b) can be supported, in particular by a support (42), on the movable covering element (14, 14a, 14b) in a form-fitting manner and/or force-fitting manner.

6. Structural unit at least according to one of Claims 1 to 5, **characterized in that**
the first bearing partner (46) of the movable covering element (14, 14a) and the part-open second bearing shell (48) of the movable covering element (14, 14a) are configured to be in one piece with one another.

7. Structural unit at least according to one of Claims 1 to 5, **characterized in that**
the opening region (52) of the part-open first bearing shell (44) and/or the opening region (54) of the part-open second bearing shell (48) cover/covers an angular range (56) of less than 180°, in particular cover/covers less than 135° and particularly preferably cover/covers 90°.

8. Structural unit at least according to one of Claims 1 to 5, **characterized in that**
the movable holding element (18, 18a, 18b) has a first end (58) and a second end (60) and/or wherein the first end (58) has the second bearing partner (50) and/or wherein the second end (60) has a holding region (62) for holding at least one object.

9. Structural unit according to at least one of the preceding claims, **characterized in that**
the movable holding element (18, 18a, 18b) is an injection-moulded part or is made of metal and/or the movable covering element (14, 14a, 14b) is manufactured from a material from the group consisting of: rolled metal sheet, an extruded aluminium profile and a plastic, in particular a pultrudate.

10. Structural unit according to at least one of the preceding claims, **characterized in that**
the movable holding element (18, 18a) has a first end (58), a second end (60) and a portion (80) between the first end (58) and the second end (60), wherein the portion (80) is hook-shaped in form.

11. Structural unit according to at least one of the preceding claims, **characterized in that**
the movable holding element (18, 18a) has an arcuate region (82, 82a) and a stabilizing element (84, 84a) supporting the arcuate region (82, 82a).

12. Structural unit according to at least one of the preceding claims, **characterized in that**
the movable holding element (18b) is received in a C-slot (142) extending in a longitudinal direction (140) of the movable covering element (14b).

13. Structural unit according to Claim 12, **characterized in that**
the C-slot (142) is arranged on the movable covering element (14b) at a distance from the first and second support bearing (22, 26).

14. Structural unit according to at least one of the preceding claims, **characterized in that**
the positionally fixed bearing element (12) is a part (88) of a luggage storage unit (90) and/or the movable covering element (14, 14a, 14b) is a covering (16) of a shading system (92) and/or the movable holding element (18, 18a, 18b) is a clothes hook (20).

## Revendications

1. Unité (10, 10a, 10b) modulaire, comportant au moins un élément (12) de palier fixe en position, un élément (14, 14a, 14b) mobile de recouvrement, notamment un recouvrement (16) de store, et au moins un élément (18, 18a, 18b) mobile de retenue, notamment un crochet (20), dans lequel l'élément (14, 14a, 14b) mobile de recouvrement est, par rapport à l'élément (12) de palier fixe en position, monté tournant autour d'une premier axe (24) de rotation, en utilisant un premier palier (18, 18a, 18b) d'appui, et l'élément (26) mobile de retenue est, par rapport à l'élément (12) de palier fixe en position, monté tournant autour d'un deuxième axe (28) de rotation, en utilisant un deuxième palier (26) d'appui, dans laquelle le premier axe (24) de rotation et le deuxième axe (28) de rotation sont coaxiaux l'un par rapport à l'autre,
**caractérisée en ce que**
l'élément (12) de palier fixe en position a un premier coussinet (44) ouvert par endroits, dans lequel est reçu à rotation un partenaire (46) de palier, pouvant être inséré dans le premier coussinet (44), ouvert par endroits, de l'élément (14, 14a, 14b) mobile de recouvrement et l'élément (14, 14a) mobile de recouvrement a un deuxième coussinet (48), ouvert par endroits, dans lequel est reçu un deuxième partenaire (50) de palier, pouvant être inséré dans le deuxième coussinet (48) ouvert par endroits, de l'élément (18, 18a) mobile de retenue.

2. Unité modulaire suivant la revendication 1, **caractérisée en ce que**
la rotation de l'élément (14, 14a, 14b) mobile de recouvrement dans le premier palier (22) d'appui est limitée, notamment en utilisant un premier élément (30) de limitation ou plusieurs premiers éléments (30) de limitation, à une première plage (32) angulaire de rotation et/ou la rotation de l'élément (18, 18a, 18b) mobile de retenue dans le deuxième palier (26) d'appui est limitée à une deuxième plage (36) angulaire de rotation, notamment en utilisant un deuxième élément (34) de limitation ou plusieurs deuxièmes éléments (34) de limitation.

3. Unité modulaire suivant la revendication 1 ou 2,
**caractérisée en ce que**
l'élément (14, 14a) mobile de recouvrement et/ou l'élément (18, 18a) mobile de retenue est/sont constitué(s) de manière à ce que le premier palier (22) d'appui et le deuxième palier (26) d'appui ne puissent absorber que des forces radiales dans la même direction (38) radiale.

4. Unité modulaire suivant au moins l'une des revendications précédentes, **caractérisée en ce que**
le deuxième palier (26) d'appui est constitué sous la forme d'un palier (40) lisse radial.

5. Unité modulaire suivant au moins l'une des revendications précédentes, **caractérisée en ce que**
l'élément (18, 18a, 18b) mobile de retenue peut être appuyé à complémentarité de forme et/ou à coopération de forces, notamment par un appui (42) sur l'élément (14, 14a, 14b) mobile de recouvrement.

6. Unité modulaire suivant au moins l'une des revendications 1 à 5, **caractérisée en ce que**
le premier partenaire (46) de palier d'un élément (14, 14a) mobile de recouvrement et le deuxième coussinet (48), ouvert par endroits, d'un élément (14, 14a) mobile de recouvrement sont réalisés entre eux en étant en une pièce.

7. Unité modulaire suivant au moins l'une des revendications 1 à 5, **caractérisée en ce que**
la plage (52) d'ouverture du premier coussinet (44) ouvert par endroits et/ou la plage (54) d'ouverture du deuxième coussinet (48) ouvert par endroits recouvre une plage (56) angulaire plus petite que 180°, notamment plus petite que 135° et, d'une manière particulièrement préférée, recouvre 90°.

8. Unité modulaire suivant au moins l'une des revendications 1 à 5, **caractérisée en ce que**
l'élément (18, 18a, 18b) mobile de retenue a un premier bout (58) et un deuxième bout (60) et/ou dans laquelle le premier bout (58) a un deuxième partenaire (50) de palier et/ou dans laquelle le deuxième bout (60) a une partie (62) de retenue pour retenir au moins un objet.

9. Unité modulaire suivant au moins l'une des revendications précédentes, **caractérisée en ce que**
l'élément (18, 18a, 18b) de retenue est une pièce coulée par injection ou est en métal et/ou l'élément (14, 14a, 14b) mobile de recouvrement est d'un matériau du groupe constitué de : une tôle cintrée, un profilé d'aluminium filé à la presse et une matière plastique, notamment du pultrodate.

10. Unité modulaire suivant au moins l'une des revendications précédentes, **caractérisée en ce que**
l'élément (18, 18a) mobile de retenue a un premier bout (58), un deuxième bout (60) et un tronçon (80) entre le premier bout (58) et le deuxième bout (60), le tronçon (80) étant en forme de crochet.

11. Unité modulaire suivant au moins l'une des revendications précédentes, **caractérisée en ce que**
l'élément (18, 18a) mobile de retenue a une partie (82, 82a) en forme d'arc et un élément (84, 84a) de stabilisation venant à l'appui de la partie (82, 82a) en forme d'arc.

12. Unité modulaire suivant au moins l'une des revendications précédentes, **caractérisée en ce que**
l'élément (18b) mobile de retenue est reçu dans une rainure (142) en C s'étendant dans une direction (140) longitudinale de l'élément (14b) mobile de recouvrement.

13. Unité modulaire suivant la revendication 12, **caractérisée en ce que**
la rainure (142) en C sur l'élément (14b) mobile de recouvrement est à distance du premier et du deuxième paliers (22, 26) d'appui.

14. Unité modulaire suivant au moins une des revendications précédentes **caractérisée en ce que**
l'élément (12) de palier fixe en position est une partie (88) d'une unité (90) de consigne des bagages et/ou l'élément (14, 14a, 14b) mobile de recouvrement est un recouvrement (16) d'un système (92) donnant de l'ombre et/ou l'élément (18, 18a, 18b) mobile de retenue est un porte-manteau (20).
